# FASCICULE DE BREVET EUROPEEN

(11) **EP 4 627 600 B1**
(45) Date de publication et mention de la délivrance du brevet: **30.09.2026**
(21) Numéro de dépôt: 23812953.0
(22) Date de dépôt: 27.11.2023
(51) Int. Cl.: G21C 17/01

(54) **DISPOSITIF D'INSPECTION D'UNE CUVE DE RÉACTEUR NUCLÉAIRE**
VORRICHTUNG ZUR INSPEKTION EINES KERNREAKTORGEFÄSSES
DEVICE FOR INSPECTING A NUCLEAR REACTOR VESSEL

(30) Priorité: 28.11.2022 FR 2212418
(43) Date de publication de la demande: 08.10.2025
(60) Demande divisionnaire: 26192254.6 / 4 800 712
(73) Titulaire: Intercontrole, 94150 Rungis (FR)
(72) Inventeur: ARTILLAN, Eric, 84120 Mirabeau (FR); GARZINO, Geoffrey, 83560 Vinon sur Verdon (FR)
(74) Mandataire: Lavoix
(86) Numéro de dépôt international: PCT/EP2023/083191
(87) Numéro de publication internationale: WO 2024/115400

(56) Documents cités:
- EP-A2- 2 772 334
- US-A- 3 809 607
- US-A- 3 943 756
- US-A- 4 165 254

## Description

La présente invention concerne le domaine de l'inspection des cuves de réacteur nucléaire, et en particulier un dispositif d'inspection d'une cuve de réacteur nucléaire.

Un réacteur nucléaire à eau légère comprend une cuve de réacteur nucléaire recevant un cœur de réacteur nucléaire composé d'une pluralité d'assemblages de combustible nucléaire contenant le combustible nucléaire et disposés côte à côte dans la cuve de réacteur nucléaire.

La cuve de réacteur nucléaire est fermée par un couvercle et munie de tubulures qui débouchent dans la cuve de réacteur nucléaire, et par l'intermédiaire desquelles la cuve de réacteur nucléaire est reliée à des boucles d'un circuit fluidique, appelé « circuit primaire », prévu pour la circulation d'eau appelée « eau primaire ».

Chaque boucle du circuit primaire est munie d'une pompe, appelée « pompe primaire », pour assurer la circulation de l'eau primaire dans la boucle, et d'un générateur de vapeur pour générer de la vapeur à l'aide de l'eau primaire circulant dans la boucle.

Le circuit primaire possède au moins un pressuriseur pour maintenir l'eau primaire à une pression donnée dans le circuit primaire et dans la cuve de réacteur nucléaire.

En fonctionnement, l'eau primaire circule dans les boucles en passant par la cuve de réacteur nucléaire. L'eau primaire est chauffée dans la cuve de réacteur nucléaire au contact des assemblages de combustible nucléaire et conduite vers les générateurs de vapeur dans les boucles du circuit primaire.

Ainsi, le circuit primaire est un circuit fermé qui assure la transmission de la chaleur dégagée dans le cœur de réacteur nucléaire (où se situe le combustible et s'opère la réaction en chaîne) aux générateurs de vapeur qui transforment cette chaleur en vapeur d'eau.

Il convient de procéder à des inspections de la cuve de réacteur nucléaire, et en particulier à des inspections des tubulures équipant la cuve de réacteur nucléaire. De telles inspections sont réalisées par exemple lors d'opérations de maintenance mises en œuvre pendant une phase d'arrêt du réacteur nucléaire.

Il est souhaitable de pouvoir réaliser l'inspection de la cuve de réacteur nucléaire de manière simple et efficace, afin de limiter le temps nécessaire à la réalisation des opérations de maintenance.

EP2772334A2 divulgue un appareil de réparation de soudure d'une centrale nucléaire comprenant une unité d'inspection configurée pour détection un défaut sur une soudure.

US3943756A, US3809607A et US4165254A divulguent des dispositifs d'inspection de cuve de réacteur nucléaire adaptés pour inspecter une tubulure de la cuve de réacteur nucléaire.

Un des buts de l'invention est de proposer un dispositif d'inspection d'une cuve de réacteur nucléaire qui permette de réaliser l'inspection de manière simple et efficace.

A cet effet, l'invention propose un dispositif d'inspection d'une cuve de réacteur nucléaire tel que défini à la revendication 1.

L'outillage de positionnement possédant un degré de liberté en translation suivant une direction verticale et un degré de liberté en rotation autour d'un axe vertical permet de positionner la tête d'inspection insérée dans une tubulure facilement et de manière appropriée pour réaliser des mesures précises et pertinentes, en particulier lorsque la tubulure présente un coude.

Des caractéristiques optionnelles du dispositif d'inspection sont définies au revendications 2 à 18.

L'invention et ses avantages seront mieux compris à la lecture de la description qui va suivre, donnée uniquement à titre d'exemple non limitatif et faite en référence aux dessins annexés, sur lesquels :
- la Figure 1 est une vue en coupe d'une cuve de réacteur nucléaire et d'un dispositif d'inspection fixé sur la cuve pour l'inspection d'une tubulure de la cuve de réacteur nucléaire ;
- la Figure 2 est une vue en perspective du dispositif d'inspection ;
- la Figure 3 est une vue en perspective d'un outillage de positionnement et d'une tête d'inspection portée par l'outillage de positionnement ;
- la Figure 4 est une vue en perspective du dispositif d'inspection démonté et conditionné pour son transport.

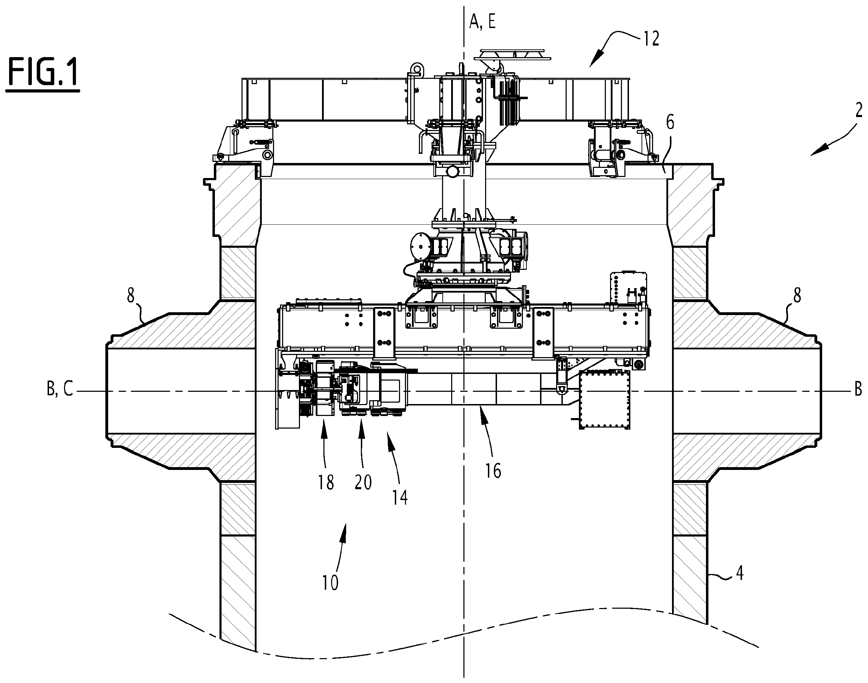

Tel qu'illustrée sur la Figure 1, une cuve de réacteur nucléaire 2 s'étend suivant un axe central vertical appelé par la suite axe de cuve A.

La cuve de réacteur nucléaire 2 comprend une paroi latérale 4 cylindrique et de section transversale circulaire centrée sur l'axe de cuve A, dont l'extrémité inférieure est fermée par un fond (non visible), par exemple hémisphérique.

La cuve de réacteur nucléaire 2 présente, à l'extrémité supérieure de sa paroi latérale 4, un bord supérieur délimitant une ouverture supérieure 6 destinée à être fermée à l'aide d'un couvercle (non visible).

De manière connue, la paroi latérale 4 possède à son extrémité supérieure une région de fixation annulaire, généralement appelée bride, configurée pour la fixation du couvercle sur la paroi latérale 4.

La fixation est réalisée généralement à l'aide de boulons répartis sur la circonférence de la bride, qui comprend des orifices de fixations prévus pour recevoir les boulons.

La cuve de réacteur nucléaire 2 est munie de tubulures 8 pour le raccordement de la cuve de réacteur nucléaire 2 au circuit primaire de la centrale nucléaire. Deux tubulures 8 diamétralement opposées sont visibles sur la Figure 1. En pratique, la cuve de réacteur nucléaire 2 est munie par exemple de deux, quatre, six ou huit tubulures 8.

Chaque tubulure 8 débouche à l'intérieur de la cuve de réacteur nucléaire 2, en particulier sur la paroi latérale 4, suivant un axe de tubulure B sensiblement horizontal.

L'axe de tubulure B de chaque tubulure 8 est de préférence radial par rapport à l'axe de cuve A de la cuve de réacteur nucléaire 2.

Chaque tubulure 8 présente éventuellement un coude situé le long de la tubulure 8 à distance de la jonction de la tubulure 8 avec la paroi latérale 4.

Un dispositif d'inspection 10 est monté sur la cuve de réacteur nucléaire 2. Le dispositif d'inspection 10 est posé sur le bord supérieure de la paroi latérale 4, en particulier sur la bride de la paroi latérale 4.

Dans la suite de la description, les termes d'orientation tels que « horizontal » et « vertical », « haut » et « bas » s'étendent par référence au dispositif d'inspection 10 monté sur la cuve de réacteur nucléaire 2.

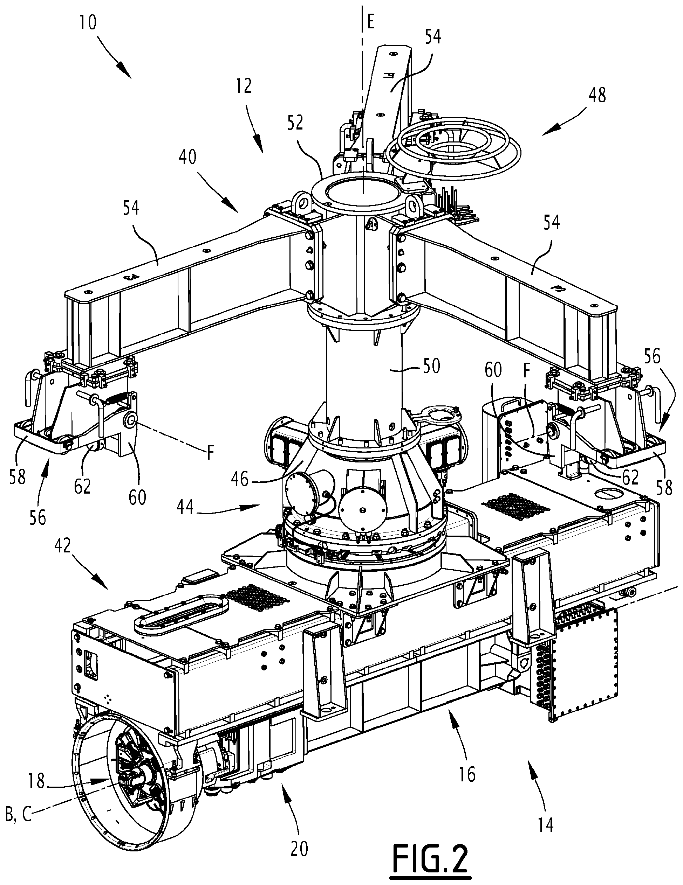

Comme illustré sur les Figures 1 et 2, le dispositif d'inspection 10 comprend un ensemble de support 12 configuré pour être installé sur la cuve de réacteur nucléaire 2 et un outil d'inspection 14 monté sur l'ensemble de support 12.

L'outil d'inspection 14 comprend un chariot 16 porté par l'ensemble de support 12 en étant mobile en translation suivant un axe de translation horizontal C par rapport à l'ensemble de support 12, et une tête d'inspection 18 configurée pour être insérée dans une tubulure 8 pour réaliser une inspection de la tubulure 8, en particulier pour effectuer des mesures à l'intérieur de la tubulure 8, la tête d'inspection 18 étant montée sur le chariot 16 par l'intermédiaire d'un outillage de positionnement 20.

Comme illustré sur la Figure 1, l'ensemble de support 12 est configuré de telle manière que le chariot 16 est positionné avec son axe de translation horizontal C parallèle, et de préférence, coïncidant avec l'axe de tubulure B de la tubulure 8 en cours d'inspection 8.

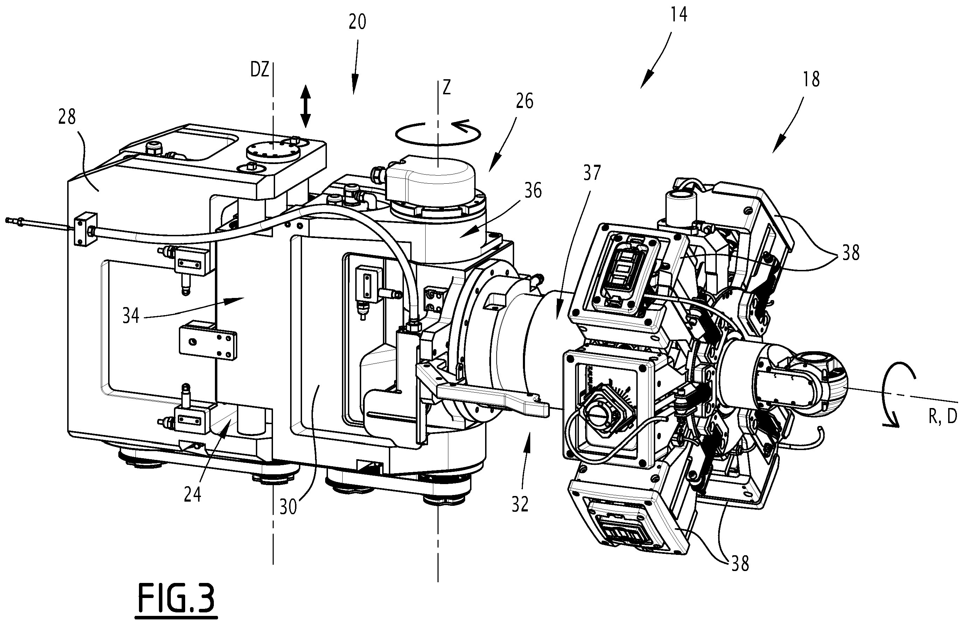

Comme illustré sur la Figure 3, l'outillage de positionnement 20 comprend au moins deux degrés de liberté incluant une translation suivant une direction verticale de positionnement DZ et une rotation autour d'un axe vertical de positionnement Z.

Ainsi, l'outillage de positionnement 20 permet un déplacement de la tête d'inspection 18 relativement au chariot 16 en translation suivant la direction verticale de positionnement DZ et en rotation autour de l'axe vertical de positionnement Z.

L'outillage de positionnement 20 comprend par exemple une liaison glissière 24 permettant une translation suivant la direction verticale de positionnement DZ. La liaison glissière 24 possède comme unique degré de liberté la translation suivant la direction verticale de positionnement DZ.

L'outillage de positionnement 20 comprend par exemple une liaison pivot 26 permettant la rotation autour de l'axe vertical de positionnement Z. La liaison pivot 26 possède comme unique degré de liberté la rotation autour de l'axe vertical de positionnement Z.

De préférence, la liaison glissière 24 et la liaison pivot 26 sont disposées cinématiquement en série entre le chariot 16 et la tête d'inspection 18, en particulier dans cet ordre.

L'outillage de positionnement 20 comprend par exemple une base 28 configurée pour être fixée rigidement sur le chariot 16 et une pièce intermédiaire 30 montée sur la base 28 par l'intermédiaire de l'une parmi la liaison glissière 24 et la liaison pivot 26, la tête d'inspection 18 étant montée sur la pièce intermédiaire 30 par l'intermédiaire de l'autre parmi la liaison glissière 24 et la liaison pivot 26.

De préférence, la pièce intermédiaire 30 est montée sur la base 28 par l'intermédiaire de la liaison glissière 24 et la tête d'inspection 18 est montée sur la pièce intermédiaire 30 par l'intermédiaire de la liaison pivot 26.

Avantageusement, l'outillage de positionnement 20 possède un degré de liberté en rotation autour d'un axe horizontal de positionnement R. La tête d'inspection 18 est portée par le chariot 16 en étant mobile en rotation autour de l'axe horizontal de positionnement R.

L'outillage de positionnement 20 comprend par exemple une liaison pivot 32 permettant une rotation autour de l'axe horizontal de positionnement R. La liaison pivot 32 possède comme unique degré de liberté la rotation autour de l'axe horizontal de positionnement R.

Dans un exemple de réalisation avec la pièce intermédiaire 30, la tête d'inspection 18 est montée sur la pièce intermédiaire 30 par l'intermédiaire de la liaison pivot 32.

Avantageusement, l'outillage de positionnement 20 comprend exactement trois degrés de liberté, à savoir la translation suivant la direction verticale de positionnement DZ, la rotation autour de l'axe vertical de positionnement Z et la rotation autour de l'axe horizontal de positionnement R.

Avantageusement, l'outillage de positionnement 20 est muni d'actionneurs configurés pour déplacer la tête d'inspection 18 relativement au chariot 16 suivant chacun de degrés de liberté de l'outillage de positionnement 20.

Chaque actionneur de l'outillage de positionnement 20 est par exemple un actionneur électrique, en particulier un moteur électrique, un actionneur pneumatique ou un actionneur hydraulique.

L'outillage de positionnement 20 comprend par exemple un actionneur de translation 34 pour assurer l'entraînement en translation suivant la direction verticale de positionnement DZ, un actionneur de rotation verticale 36 pour assurer l'entraînement en rotation autour de l'axe vertical de positionnement Z et/ou un actionneur de rotation horizontale 37 pour assurer l'entrainement en rotation autour de l'axe horizontal de positionnement R.

La tête d'inspection 18 porte une ou plusieurs sondes 38, chaque sonde 38 étant configurée pour réaliser des mesures sur la tubulure 8 dans laquelle la tête d'inspection 18 est insérée.

Chaque sonde 38 est par exemple choisie parmi une sonde à courants de Foucault et une sonde à ultrasons. De telle sondes permettent d'effectuer des mesures de contrôle non destructifs de pièces métalliques et/ou de soudure de la tubulure 8.

Chaque sonde 38 est par exemple dirigée radialement relativement à un axe central D de la tête d'inspection 18 coïncidant avec l'axe de tubulure B lorsque la tête d'inspection 18 est insérée dans la tubulure 8.

Comme dans l'exemple illustré, lorsque la tête d'inspection 18 est rotative par rapport au chariot 16 autour d'un axe horizontal de positionnement R, cet axe horizontal de positionnement R coïncide de préférence avec l'axe central D de la tête d'inspection 18

La tête d'inspection 18 comprend par exemple plusieurs sondes 38 agencées en étoile autour de l'axe central D de la tête d'inspection 18, chaque sonde 38 étant dirigée radialement vers l'extérieur relativement à l'axe central D de la tête d'inspection 18.

Comme visible sur la Figure 2, l'ensemble de support 12 comprend un ensemble de montage 40 configuré pour être posé sur la cuve de réacteur nucléaire 2 et portant un support d'outillage 42, le chariot 16 de l'outil d'inspection 14 étant monté en translation sur le support d'outillage 42 suivant l'axe de translation C.

De préférence, le support d'outillage 42 est monté mobile en rotation autour d'un axe d'orientation E vertical par rapport à l'ensemble de montage 40 par l'intermédiaire d'un mécanisme rotatif 44. Le mécanisme rotatif 44 comprend par exemple une couronne tournante.

Le mécanisme rotatif 44 est de préférence muni d'un actionneur 46 pour assurer l'entraînement en rotation du support d'outillage 42 autour de l'axe d'orientation E par rapport à l'ensemble de montage 40. L'actionneur 46 est par exemple un actionneur électrique, par exemple un moteur électrique, un actionneur pneumatique ou un actionneur hydraulique.

L'ensemble de montage 40 est configuré pour être posé sur la cuve de réacteur nucléaire 2, en particulier sur le bord supérieur de la cuve de réacteur nucléaire 2, de telle manière que l'axe d'orientation E du support d'outillage 42 coïncide avec l'axe central A de la cuve de réacteur nucléaire 2.

L'ensemble de montage 40 comprend par exemple un ensemble d'appui 48 configuré pour prendre appui sur le bord supérieur de la cuve de réacteur nucléaire 2, et une colonne de montage 50 s'étendant verticalement vers le bas à partir de l'ensemble d'appui 48, le support d'outillage 42 étant monté à une extrémité inférieure de la colonne de montage 50, de préférence par l'intermédiaire du mécanisme rotatif 44 disposé à l'extrémité inférieure de la colonne de montage 50.

Comme illustré sur la Figure 1, lorsque l'ensemble de montage 40 est installé sur la cuve de réacteur nucléaire 2, la colonne de montage 50 s'étend verticalement vers le bas à l'intérieur de la cuve de réacteur nucléaire 2, et le support d'outillage 42 est situé à l'intérieur de la cuve de réacteur nucléaire 2.

L'ensemble d'appui 48 comprend par exemple une configuration en étoile, et possède une partie centrale 52 et plusieurs jambes 54, en particulier trois jambes 54, s'étendant radialement à partir de la partie centrale 52, chaque jambe 54 ayant une extrémité proximale connectée à la partie centrale 52 et une extrémité distale opposée à la partie centrale 52 qui est configurée pour être en appui sur le bord supérieur de la cuve de réacteur nucléaire 2.

L'ensemble de support 12 est de préférence démontable pour faciliter son transport. Le dispositif d'inspection 10 peut en effet être transporté d'un réacteur nucléaire à un autre pour réaliser des inspections de différents réacteurs nucléaires.

De préférence, chaque jambe 54 de l'ensemble d'appui 48 est monté de manière amovible sur la partie centrale 52 de l'ensemble d'appui 48. Ceci permet un démontage de l'ensemble d'appui 48.

De préférence, la colonne de montage 50 est montée de manière amovible sur l'ensemble d'appui 48, en particulier sur la partie centrale 52 de l'ensemble d'appui 48. Il est possible de disposer de plusieurs colonnes de montage 50 de longueurs différentes, et de choisir la colonne de montage 50 appropriée en fonction de la hauteur à laquelle de situe les tubulures 8 d'une cuve de réacteur nucléaire 2 à inspecter.

Avantageusement, chaque jambe 54 est une poutre métallique s'étendant sensiblement horizontalement lorsque l'ensemble d'appui 48 est posé sur le bord supérieur de la cuve de réacteur nucléaire 2.

Un ensemble d'appui 48 possédant de tels jambes 54 présente des dimensions verticales réduites, ce qui facilite le déploiement du dispositif d'inspection 10, étant donné que l'espace disponible dans une centrale nucléaire est limité.

Avantageusement, l'ensemble d'appui 48 comprend, à l'extrémité distale de chaque jambes 54, un pied 56 par l'intermédiaire duquel la jambe 54 vient en appui sur la cuve de réacteur nucléaire 2, en particulier sur le bord supérieur de la cuve de réacteur nucléaire 2 lors de l'installation de l'ensemble de support 12 sur la cuve de réacteur nucléaire 2.

Les pieds 56 sont configurés pour un auto-centrage de l'ensemble de support 12 par rapport à la cuve de réacteur nucléaire 2, l'auto-centrage s'opérant sous l'effet du poids de l'ensemble de support 12 lors de la pose de l'ensemble de support 12 sur le bord supérieur de la cuve de réacteur nucléaire 2.

Dans un exemple de réalisation, chaque pied 56 est articulé sur la jambe 54 associée autour d'un axe d'articulation F qui est horizontal et de préférence orthoradial par rapport à l'axe central A de la cuve de réacteur nucléaire 2, et possède une portion d'appui vertical 58 agencée pour venir en appui verticalement sur le bord supérieur de la cuve de réacteur nucléaire 2 et une portion d'appui horizontal 60 disposée pour venir en appui horizontalement sur la paroi latérale 4 de la cuve de réacteur nucléaire 2, de préférence par l'intermédiaire d'un patin d'appui horizontal 62.

Les pieds 56 sont configurés de telle sorte que lors de la pose de l'ensemble de support 12 sur la cuve de réacteur nucléaire 2, chaque pied 56 vient en appui verticalement sur la cuve de réacteur nucléaire 2 par l'intermédiaire de sa portion d'appui vertical 58, ce qui tend à faire pivoter le pied 56 autour de son axe d'articulation F et à déplacer la portion d'appui horizontal 60 du pied 56 en appui contre la paroi latérale 4 sous l'effet du poids de l'ensemble de support 12.

Cet appui sensiblement simultané des portions d'appui horizontale 60 des pieds 56 sur la paroi latérale 4 de la cuve du réacteur nucléaire 2 lors de la pose de l'ensemble de support 12 provoque un centrage automatique de l'ensemble de support 12 sous l'effet du poids de l'ensemble de support 12.

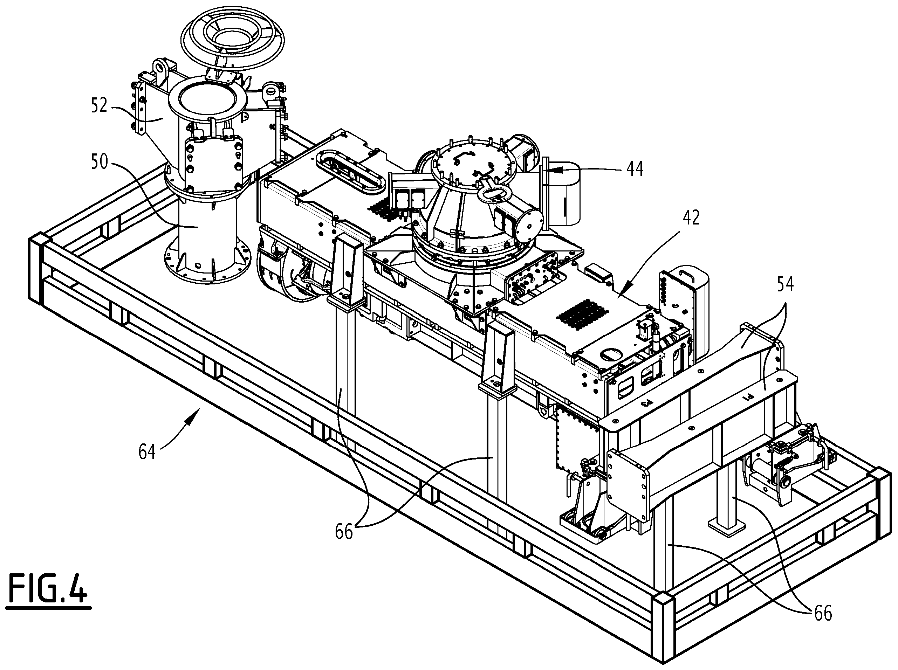

Comme illustré sur la Figure 4, l'ensemble de support 12 démontable est facilement transportable, par exemple sur un berceau de transport 64 muni de supports 66 pour la fixation des différents éléments séparables de l'ensemble de support 12.

Dans l'exemple illustré, le support d'outillage 42 muni du mécanisme rotatif 44 est posé sur des supports 66 dédiés. La partie centrale 52 et la colonne de montage 50 maintenues assemblées sont fixées sur le berceau de transport 64. Les jambes 54 sont démontés de la partie centrale 52 et fixés sur des supports 66 dédiés. Seulement deux des jambes 54 sont visibles sur la Figure 4.

En fonctionnement, le cas échant, l'ensemble de support 12 est assemblé, par exemple, en fixant les jambes 54 sur la partie centrale 52 formant ainsi l'ensemble d'appui 48, et en fixant l'ensemble formé par le support d'outillage 42 et le mécanisme rotatif 44 à l'extrémité inférieure de la colonne de montage 50.

L'outil d'inspection 14 est monté sur le support d'outillage 42. Plus particulièrement, la chariot 16 est monté sur le support d'outillage 42, la tête d'inspection 18 étant portée par le chariot 16 par l'intermédiaire de l'outillage de positionnement 20.

L'ensemble de montage 40 est posé en appui sur le bord supérieur de la cuve de réacteur nucléaire 2. Le support d'outillage 42 se situe alors à l'intérieur de la cuve de réacteur nucléaire 2, l'outil d'inspection 14 étant situé à la hauteur appropriée pour l'insertion de la tête d'inspection 18 dans une tubulure 8 à inspecter.

Le support d'outillage 42 est pivoté autour de l'axe d'orientation E pour orienter l'outil d'inspection 14 vers une tubulure 8, en particulier pour aligner l'axe de translation horizontal C avec l'axe de tubulure B de cette tubulure 8.

La chariot 16 est déplacé en translation pour introduire la tête d'inspection 18 dans la tubulure 8. Des mesures sont effectuées à l'aide de la ou des sondes 38, en déplaçant la tête d'inspection suivant l'axe de tubulure B, et, si possible, en déplaçant la tête d'inspection 18 en rotation autour de l'axe horizontal de positionnement R.

Les degrés de liberté de l'outil de positionnement 20 en translation verticale suivant la direction verticale de positionnement DZ et en rotation autour de l'axe vertical de positionnement Z permettent d'affiner la position de la tête d'inspection 18 à l'intérieur de la tubulure 8.

Ceci permet un positionnement précis des sondes 38, qui peuvent s'avérer sensible à une variation de distance entre chaque sonde 38 et la surface interne de la tubulure 8.

En particulier, la translation verticale suivant la direction verticale de positionnement DZ permet un positionnement précis verticalement, y compris en l'absence de mobilité verticale du support d'outillage 42, voir plus précis qu'avec un déplacement vertical du support d'outillage 42, dans la mesure où seule la tête d'inspection 18 est déplacée verticalement, ce qui peut être effectué de manière plus précise.

En outre, la tubulure 8 peut être munie d'un coude, en particulier un coude tournant dans le plan horizontal.

Le degré de liberté en rotation autour de l'axe vertical de positionnement Z permet d'effectuer l'inspection d'un tel coude de la tubulure 8, en faisant pivoter la tête d'inspection 18 pour la faire avancer dans le coude en la maintenant alignée avec l'axe central local de la tubulure 8.

Grâce au dispositif d'inspection 10, il est possible de réaliser une inspection fiable et efficace. La précision d'inspection est satisfaisante et le temps d'inspection peut être réduit, ce qui limite *in fine* le temps d'arrêt du réacteur nucléaire.

Le dispositif d'inspection 10 est en outre facile à déployer et à transporter, notamment grâce à son ensemble de support 12 qui est de dimensions réduites, notamment parce qu'il n'est pas nécessaire de prévoir une colonne de montage 50 permettant une translation verticale du support d'outillage 42, et au démontage possible de son ensemble de support 12.

L'ensemble de support 12 démontable est avantageux indépendamment de l'outillage de positionnement 20.

## Revendications

1. Dispositif d'inspection d'une cuve de réacteur nucléaire (2) munie d'une tubulure (8) débouchant dans la cuve de réacteur nucléaire (2), le dispositif d'inspection comprenant un ensemble de support (12) configuré pour être monté sur la cuve de réacteur nucléaire (2), et un outil d'inspection (14) monté sur l'ensemble de support (12), l'outil d'inspection (14) comprenant un chariot (16) et une tête d'inspection (18) portée par le chariot (16), le chariot (16) étant monté sur l'ensemble de support (12) en étant mobile en translation suivant un axe de translation (C) horizontal, la tête d'inspection (18) étant configurée pour être insérée dans la tubulure (8) et portant une ou plusieurs sondes (38) pour la réalisation de mesures sur la tubulure (8), la translation du chariot (16) permettant d'engager la tête d'inspection (18) dans la tubulure (8),
**caractérisé en ce que** la tête d'inspection (18) est montée sur le chariot (16) par l'intermédiaire d'un outillage de positionnement (20) comprenant au moins deux degrés de liberté incluant une translation suivant une direction verticale de positionnement (DZ) et une rotation autour d'un axe vertical de positionnement (Z).

2. Dispositif d'inspection selon la revendication 1, dans lequel l'outillage de positionnement (20) comprend une liaison glissière (24) permettant la translation suivant la direction verticale de positionnement (DZ).

3. Dispositif selon la revendication 1 ou la revendication 2, dans lequel l'outillage de positionnement (20) comprend une liaison pivot (26) permettant la rotation autour de l'axe vertical de positionnement (Z).

4. Dispositif selon l'une quelconque des revendications précédentes, dans lequel l'outillage de positionnement (20) comprend un degré de liberté en rotation autour d'un axe horizontal de positionnement (R).

5. Dispositif d'inspection selon la revendication 4, dans lequel l'outillage de positionnement (20) comprend une liaison pivot (32) permettant la rotation autour de l'axe horizontal de positionnement (R).

6. Dispositif d'inspection selon la revendication 1, dans lequel l'outillage de positionnement (20) comprend une liaison glissière (24) permettant la translation suivant la direction verticale de positionnement (DZ), une liaison pivot (26) permettant la rotation autour de l'axe vertical positionnement (Z) et une liaison pivot permettant (32) la rotation autour de l'axe horizontal positionnement (R).

7. Dispositif d'inspection selon la revendication 6, dans lequel la liaison glissière (24), la liaison pivot (26) d'axe vertical de positionnement (Z) et la liaison pivot (32) d'axe horizontal de positionnement (R) sont disposées cinématiquement en série entre une base (28) de mécanisme de montage (20) configurée pour être fixée sur le chariot (16) et la tête d'inspection (18), de préférence dans cet ordre.

8. Dispositif d'inspection selon l'une quelconque des revendications précédentes, dans lequel l'outillage de positionnement (20) est muni d'actionneurs pour la commande de la position de la tête d'inspection (18) par rapport à une base (28) de l'outillage de positionnement (20) fixée sur le chariot (16).

9. Dispositif d'inspection selon l'une quelconque des revendications précédentes, dans lequel l'ensemble de support (12) comprend un ensemble de montage (40) configuré pour être installé sur la cuve de réacteur nucléaire (2) et portant un support d'outillage (42), le chariot (16) étant monté mobile en translation suivant l'axe de translation (B) sur le support d'outillage (42).

10. Dispositif d'inspection selon la revendication 9, dans lequel le support d'outillage (42) est monté mobile en rotation autour d'un axe de rotation vertical (E) par rapport à l'ensemble de montage (40) par l'intermédiaire d'un mécanisme rotatif (44).

11. Dispositif d'inspection selon la revendication 9 ou 10, dans lequel l'ensemble de montage (40) comprend un ensemble d'appui (48) configuré pour prendre appui sur un bord supérieur de la cuve de réacteur nucléaire (2) et une colonne de montage (50) s'étendant verticalement vers le bas à partir de l'ensemble d'appui (48), le support d'outillage (42) étant monté à une extrémité inférieure de la colonne de montage (50).

12. Dispositif d'inspection selon la revendication 11, dans lequel l'ensemble d'appui (48) comprend une partie centrale (52) et des jambes (54) s'étendant radialement à partir de la partie centrale (52), chaque jambe (54) ayant une extrémité distale opposée à la partie centrale (52) qui est configurée pour être mise en appui sur le bord supérieur de la cuve de réacteur nucléaire (2), la colonne de montage (50) s'étendant vers le bas à partir de la partie centrale (52).

13. Dispositif d'inspection selon la revendication 12, dans lequel chaque jambe (54) est une poutre métallique s'étendant sensiblement horizontalement lorsque l'ensemble de support (12) est installé sur la cuve de réacteur nucléaire (2).

14. Dispositif d'inspection selon la revendication 12 ou 13, dans lequel chaque jambe (54) est montée de manière amovible sur la partie centrale (52) et/ou la colonne de montage (50) est fixée de manière amovible sur la partie centrale (52).

15. Dispositif d'inspection selon l'une quelconque des revendications 12 à 14, dans lequel l'ensemble d'appui (48) comprend un pied (56) respectif disposé à l'extrémité distale de chaque jambe (54) et par l'intermédiaire de laquelle la jambe (54) vient en appui sur le bord supérieur de la cuve de réacteur nucléaire (2), les pieds (56) étant configurés pour un auto-centrage de l'ensemble de support (12) relativement à la cuve de réacteur nucléaire (2) sous l'effet du poids de l'ensemble de support (12).

16. Dispositif d'inspection selon la revendication 15, dans lequel chaque pied (56) est articulé sur la jambe (54) associée autour d'un axe d'articulation (F) et possède une portion d'appui vertical (58) agencée pour venir en appui verticalement sur le bord supérieur de la cuve de réacteur nucléaire (2) et une portion d'appui horizontal (60) disposée pour venir appui horizontalement sur une paroi latérale (4) de la cuve de réacteur nucléaire (2), de telle sorte que lors de la pose de l'ensemble de support (12) sur la cuve de réacteur nucléaire (2), chaque pied (56) vient en appui verticalement sur le bord supérieur de la cuve de réacteur nucléaire (2) par l'intermédiaire de sa portion d'appui vertical (58), ce qui tend à faire pivoter le pied (56) autour de son axe d'articulation (F) et à déplacer la portion d'appui horizontal (60) du pied (56) en appui contre la paroi latérale (4) sous l'effet du poids de l'ensemble de support (12).

17. Dispositif d'inspection selon l'une quelconque des revendications précédentes, dans lequel chacune des sondes (38) est choisie parmi une sonde à courant de Foucault ou une sonde à ultrasons.

18. Dispositif d'inspection selon l'une quelconque des revendications précédentes, dans lequel la tête d'inspection (18) porte plusieurs sondes (38) disposées selon une configuration en étoile, les sondes (38) étant répartie autour d'un axe central (D) de la tête d'inspection (18), chaque sonde (38) étant orientée radialement vers l'extérieur.

## Patentansprüche

1. Inspektionsvorrichtung eines Reaktordruckbehälters (2) eines Kernreaktors, der mit einem Stutzen (8) versehen ist, der in den Reaktordruckbehälter (2) eines Kernreaktors mündet, wobei die Inspektionsvorrichtung eine Trägereinheit (12), die konfiguriert ist, um an dem Reaktordruckbehälter (2) eines Kernreaktors montiert zu werden, und ein Inspektionswerkzeug (14), das an der Trägereinheit (12) montiert ist, umfasst, wobei das Inspektionswerkzeug (14) einen Wagen (16) und einen von dem Wagen (16) getragenen Inspektionskopf (18) umfasst, wobei der Wagen (16) an der Trägereinheit (12) montiert ist, indem er in Translation entlang einer horizontalen Translationsachse (C) beweglich ist, wobei der Inspektionskopf (18) konfiguriert ist, um in den Stutzen (8) eingesetzt zu werden, und eine oder mehrere Sonden (38) für die Durchführung von Messungen an dem Stutzen (8) trägt, wobei die Translation des Wagens (16) ermöglicht, den Inspektionskopf (18) in den Stutzen (8) einzuführen, **dadurch gekennzeichnet, dass** der Inspektionskopf (18) an dem Wagen (16) mittels eines Positionierungswerkzeugs (20) montiert ist, das mindestens zwei Freiheitsgrade umfasst, einschließlich einer Translation entlang einer vertikalen Positionierungsrichtung (DZ) und einer Drehung um eine vertikale Positionierungsachse (Z).

2. Inspektionsvorrichtung gemäß Anspruch 1, in der das Positionierungswerkzeug (20) ein Schiebegelenk (24) umfasst, das die Translation entlang der vertikalen Positionierungsrichtung (DZ) ermöglicht.

3. Vorrichtung gemäß Anspruch 1 oder Anspruch 2, in der das Positionierungswerkzeug (20) ein Drehgelenk (26) umfasst, das die Drehung um die vertikale Positionierungsachse (Z) ermöglicht.

4. Vorrichtung gemäß einem beliebigen der vorhergehenden Ansprüche, in der das Positionierungswerkzeug (20) einen Freiheitsgrad in Drehung um eine horizontale Positionierungsachse (R) umfasst.

5. Inspektionsvorrichtung gemäß Anspruch 4, in der das Positionierungswerkzeug (20) ein Drehgelenk (32) umfasst, das die Drehung um die horizontale Positionierungsachse (R) ermöglicht.

6. Inspektionsvorrichtung gemäß Anspruch 1, in der das Positionierungswerkzeug (20) ein Schiebegelenk (24), das die Translation entlang der vertikalen Positionierungsrichtung (DZ) ermöglicht, ein Drehgelenk (26), das die Drehung um die vertikale Positionierungsachse (Z) ermöglicht, und ein Drehgelenk (32), das die Drehung um die horizontale Positionierungsachse (R) ermöglicht, umfasst.

7. Inspektionsvorrichtung gemäß Anspruch 6, in der das Schiebegelenk (24), das Drehgelenk (26) mit vertikaler Positionierungsachse (Z) und das Drehgelenk (32) mit horizontaler Positionierungsachse (R) kinematisch in Reihe zwischen einer Basis (28) des Montagemechanismus (20), die konfiguriert ist, um an dem Wagen (16) befestigt zu werden, und dem Inspektionskopf (18), vorzugsweise in dieser Reihenfolge, angeordnet sind.

8. Inspektionsvorrichtung gemäß einem beliebigen der vorhergehenden Ansprüche, in der das Positionierungswerkzeug (20) mit Aktuatoren für die Steuerung der Position des Inspektionskopfs (18) in Bezug auf eine an dem Wagen (16) befestigte Basis (28) des Positionierungswerkzeugs (20) versehen ist.

9. Inspektionsvorrichtung gemäß einem beliebigen der vorhergehenden Ansprüche, in der die Trägereinheit (12) eine Montageeinheit (40) umfasst, die konfiguriert ist, um an dem Reaktordruckbehälter (2) eines Kernreaktors installiert zu werden, und einen Werkzeugträger (42) trägt, wobei der Wagen (16) in Translation entlang der Translationsachse (B) an dem Werkzeugträger (42) beweglich montiert ist.

10. Inspektionsvorrichtung gemäß Anspruch 9, in der der Werkzeugträger (42) mittels eines Drehmechanismus (44) in Drehung um eine vertikale Drehachse (E) in Bezug auf die Montageeinheit (40) beweglich montiert ist.

11. Inspektionsvorrichtung gemäß Anspruch 9 oder 10, in der die Montageeinheit (40) eine Stützeinheit (48), die konfiguriert ist, um sich auf einem oberen Rand des Reaktordruckbehälters (2) eines Kernreaktors abzustützen, und eine Montagesäule (50), die sich von der Stützeinheit (48) aus vertikal nach unten erstreckt, umfasst, wobei der Werkzeugträger (42) an einem unteren Ende der Montagesäule (50) montiert ist.

12. Inspektionsvorrichtung gemäß Anspruch 11, in der die Stützeinheit (48) einen zentralen Teil (52) und Beine (54) umfasst, die sich von dem zentralen Teil (52) aus radial erstrecken, wobei jedes Bein (54) ein distales Ende aufweist, das dem zentralen Teil (52) gegenüberliegt und konfiguriert ist, um auf dem oberen Rand des Reaktordruckbehälters (2) eines Kernreaktors in Anlage gebracht zu werden, wobei sich die Montagesäule (50) von dem zentralen Teil (52) aus nach unten erstreckt.

13. Inspektionsvorrichtung gemäß Anspruch 12, in der jedes Bein (54) ein Metallträger ist, der sich im Wesentlichen horizontal erstreckt, wenn die Trägereinheit (12) an dem Reaktordruckbehälter (2) eines Kernreaktors installiert ist.

14. Inspektionsvorrichtung gemäß Anspruch 12 oder 13, in der jedes Bein (54) abnehmbar an dem zentralen Teil (52) montiert ist und/oder die Montagesäule (50) abnehmbar an dem zentralen Teil (52) befestigt ist.

15. Inspektionsvorrichtung gemäß einem beliebigen der Ansprüche 12 bis 14, in der die Stützeinheit (48) einen jeweiligen Fuß (56) umfasst, der an dem distalen Ende jedes Beins (54) angeordnet ist und mittels dessen sich das Bein (54) auf dem oberen Rand des Reaktordruckbehälters (2) eines Kernreaktors abstützt, wobei die Füße (56) für eine Selbstzentrierung der Trägereinheit (12) relativ zu dem Reaktordruckbehälter (2) eines Kernreaktors unter der Wirkung des Gewichts der Trägereinheit (12) konfiguriert sind.

16. Inspektionsvorrichtung gemäß Anspruch 15, in der jeder Fuß (56) an dem zugeordneten Bein (54) um eine Gelenkachse (F) angelenkt ist und einen vertikalen Stützabschnitt (58), der eingerichtet ist, um vertikal auf dem oberen Rand des Reaktordruckbehälters (2) eines Kernreaktors in Anlage zu kommen, und einen horizontalen Stützabschnitt (60), der angeordnet ist, um horizontal an einer Seitenwand (4) des Reaktordruckbehälters (2) eines Kernreaktors in Anlage zu kommen, aufweist, derart, dass beim Aufsetzen der Trägereinheit (12) auf den Reaktordruckbehälter (2) eines Kernreaktors jeder Fuß (56) mittels seines vertikalen Stützabschnitts (58) vertikal auf dem oberen Rand des Reaktordruckbehälters (2) eines Kernreaktors in Anlage kommt, was dazu neigt, den Fuß (56) um seine Gelenkachse (F) zu schwenken und den horizontalen Stützabschnitt (60) des Fußes (56) unter der Wirkung des Gewichts der Trägereinheit (12) in Anlage gegen die Seitenwand (4) zu verlagern.

17. Inspektionsvorrichtung gemäß einem beliebigen der vorhergehenden Ansprüche, in dem jede der Sonden (38) aus einer Wirbelstromsonde oder einer Ultraschallsonde ausgewählt ist.

18. Inspektionsvorrichtung gemäß einem beliebigen der vorhergehenden Ansprüche, in der der Inspektionskopf (18) mehrere Sonden (38) trägt, die gemäß einer sternförmigen Konfiguration angeordnet sind, wobei die Sonden (38) um eine zentrale Achse (D) des Inspektionskopfs (18) verteilt sind, wobei jede Sonde (38) radial nach außen orientiert ist.

## Claims

1. A device for inspecting a nuclear reactor vessel (2) equipped with a connecting pipe (8) opening into the nuclear reactor vessel (2), the inspection device comprising a support unit (12) configured to be mounted on the nuclear reactor vessel (2), and an inspection tool (14) mounted on the support unit (12), the inspection tool (14) comprising a carriage (16) and an inspection head (18) carried by the carriage (16), the carriage (16) being mounted on the support unit (12) to be mobile in translation along a horizontal axis of translation (C), the inspection head (18) being configured to be inserted into the connecting pipe (8) and carrying one or more probes (38) for performing measurements on the connecting pipe (8), the translation of the carriage (16) allowing the inspection head (18) to engage in the connecting pipe (8), **characterized in that** the inspection head (18) is mounted on the carriage (16) via a positioning tool (20) comprising at least two degrees of freedom comprising a translation along a vertical positioning direction (DZ) and a rotation around a vertical positioning axis (Z).

2. The inspection device according to claim 1, wherein the positioning tool (20) comprises a sliding connection (24) allowing translation along the vertical positioning direction (DZ).

3. The device according to claim 1 or claim 2, wherein the positioning tool (20) comprises a pivot connection (26) allowing rotation around the vertical positioning axis (Z).

4. The device according to any of the preceding claims, wherein the positioning tool (20) comprises a degree of freedom in rotation around a horizontal positioning axis (R).

5. The inspection device according to claim 4, wherein the positioning tool (20) comprises a pivot connection (32) allowing rotation around the horizontal positioning axis (R).

6. The inspection device according to claim 1, wherein the positioning tool (20) comprises a sliding connection (24) allowing translation along the vertical positioning direction (DZ), a pivot connection (26) allowing rotation around the vertical positioning axis (Z), and a pivot connection allowing (32) rotation around the horizontal positioning axis (R).

7. The inspection device according to claim 6, wherein the sliding connection (24), the pivot connection (26) of the vertical positioning axis (Z), and the pivot connection (32) of the horizontal positioning axis (R) are arranged kinematically in series between a base (28) of a mounting mechanism (20) configured to be fixed on the carriage (16) and the inspection head (18), preferably in this order.

8. The inspection device according to any of the preceding claims, wherein the positioning tool (20) is equipped with actuators for controlling the position of the inspection head (18) relative to a base (28) of the positioning tool (20) fixed on the carriage (16).

9. The inspection device according to any of the preceding claims, wherein the support unit (12) comprises a mounting assembly (40) configured to be installed on the nuclear reactor vessel (2) and carrying a tooling support (42), the carriage (16) being mounted mobile in translation along the axis of translation (B) on the tooling support (42).

10. The inspection device according to claim 9, wherein the tooling support (42) is mounted mobile in rotation around a vertical rotation axis (E) relative to the mounting assembly (40) via a rotary mechanism (44).

11. The inspection device according to claim 9 or 10, wherein the mounting assembly (40) comprises a support assembly (48) configured to rest on an upper edge of the nuclear reactor vessel (2) and a mounting column (50) extending vertically downward from the support assembly (48), the tooling support (42) being mounted at a lower end of the mounting column (50).

12. The inspection device according to claim 11, wherein the support assembly (48) comprises a central part (52) and legs (54) extending radially from the central part (52), each leg (54) having a distal end opposite the central part (52) configured to rest on the upper edge of the nuclear reactor vessel (2), the mounting column (50) extending downward from the central part (52).

13. The inspection device according to claim 12, wherein each leg (54) is a metal beam extending substantially horizontally when the support unit (12) is installed on the nuclear reactor vessel (2).

14. The inspection device according to claim 12 or 13, wherein each leg (54) is mounted removably on the central part (52) and/or the mounting column (50) is fixed removably on the central part (52).

15. The inspection device according to any of claims 12 to 14, wherein the support assembly (48) comprises a respective foot (56) disposed at the distal end of each leg (54) and through which the leg (54) rests on the upper edge of the nuclear reactor vessel (2), the feet (56) being configured for self-centering the support unit (12) relative to the nuclear reactor vessel (2) under the effect of the weight of the support unit (12).

16. The inspection device according to claim 15, wherein each foot (56) is articulated on the associated leg (54) around an articulation axis (F) and has a vertical support portion (58) arranged to rest vertically on the upper edge of the nuclear reactor vessel (2) and a horizontal support portion (60) arranged to rest horizontally on a side wall (4) of the nuclear reactor vessel (2), so that when the support unit (12) is placed on the nuclear reactor vessel (2), each foot (56) rests vertically on the upper edge of the nuclear reactor vessel (2) through its vertical support portion (58), which tends to rotate the foot (56) around its articulation axis (F) and move the horizontal support portion (60) of the foot (56) in contact with the side wall (4) under the effect of the weight of the support unit (12).

17. The inspection device according to any of the preceding claims, wherein each probe (38) is chosen from an eddy current probe or an ultrasonic probe.

18. The inspection device according to any of the preceding claims, wherein the inspection head (18) carries several probes (38) arranged in a star configuration, the probes (38) being distributed around a central axis (D) of the inspection head (18), each probe (38) being oriented radially outward.
